# EUROPEAN PATENT APPLICATION

(11) **EP 4 729 656 A1**
(43) Date of publication of application: **22.04.2026**
(21) Application number: 24206905.2
(22) Date of filing: 16.10.2024
(51) Int. Cl.: C25B 1/04, C25B 9/60, C25B 9/65, C25B 9/75

(54) **BIPOLAR PLATE AND STACK FOR ELECTROLYZER**

(71) Applicant: Siemens Energy Global GmbH & Co. KG, 81739 München (DE)
(72) Inventor: Satheesh, Abhiroop, 91341 Röttenbach (DE); Purschke, Nils, 12249 Berlin (DE); Otterlee, Thomas J., Oviedo, 32766 (US)

(57) **Abstract**

A bipolar plate is provided that includes an inlet side, an outlet side opposite of the inlet side, a first side extending from the inlet side to the outlet side, and a second side parallel to the first side and extending from the inlet side to the outlet side. A perimeter is defined by the outer edges of the bipolar plate and an area is defined within the second perimeter. The perimeter is selected to reduce material in the bipolar plate. An electrolyzer stack is also provided.

## Description

Global warming has become an increasing concern, thereby making energy sources that reduce CO2 emissions more attractive. Proton exchange membrane (PEM) electrolyzer, which use electrolysis, have received attention as a means to produce Hydrogen H2, which when used as a fuel source emits no CO2 and may help address the climate crisis. Electrolysis is a widely known electro-chemical process, wherein a direct current, DC, is used to drive an otherwise nonspontaneous chemical reaction. In these processes, electrical energy converts a supply medium into an output medium, chemical energy, via electrolysis. By way of example Hydrogen is produced as an output medium from a water H₂O supply medium with an Oxygen O₂ byproduct.

### SUMMARY

Bipolar plates are exposed to water+H2 on a cathode face and water+O2 on an anode face. Bipolar plates of stainless steel are susceptible to corrosion due to the exposure to water+O2 on the anode face, whereas titanium (Ti) has outstanding corrosion resistance and is lighter weight than steel. However, titanium is more expensive than stainless steel. A bipolar plate of Ti-coated stainless steel has not been cost effective and is prone to corrosion at locations where the coatings are damaged. A bonded Ti-stainless steel bipolar plate where a two-layer bipolar plate, titanium and steel are metallurgically joined via techniques such as explosion plating or roll cladding or joined via deformation techniques such a clinching are expensive or can have voltage drops due to poor electrical contact. A more cost-effective bipolar plate that separates adjacent cells and more reliably provides electrical connection between the adjacent cells is provided.

The term "perimeter" is defined herein as the outermost parts or boundary of an object. A cell frame, a bipolar plate, and a seal component each have a perimeter, a respective area can be computed by the perimeter. Typically, the perimeter of the bipolar plate matches the perimeter of the cell frame, thus both the cell frame and the bipolar plate have the same or essentially the same area within their respective perimeters. Essentially the same area is defined herein as no more than a 3% difference. For example, essentially the same area is an area that has no more than 3% change.

Stepwise herein is defined as having shape of a step, e.g., a step in a stair, wherein opposing perpendicular angles are formed at opposite ends of a linear part.

A change to the perimeter of the bipolar plate is described herein, wherein the area defined by the perimeter of the bipolar plate and therefore, the amount of material in the bipolar plate is reduced; thereby, yielding a cost reduction. The proposed design is intended to reduce the quantity of material in the bipolar plates, while maintaining their structural integrity and electrical conductivity. The reduced amount of material decreases the weight in the bipolar plate.

The term "inlet" refers to an opening configured to receive a first fluid. The term "outlet" refers to an opening configured to remove a second fluid.

Both the cell frame and the bipolar plate have an anode face and a cathode face, where the anode face is on the anode side and the cathode face is on the cathode side. Additionally, the cell frame and the bipolar plates, include a number of apertures including an anode inlet, an anode outlet, a cathode inlet, and a cathode outlet. On the anode face, the anode inlet and anode outlet are relevant while the cathode inlet and the cathode outlet are not relevant. On the cathode side, the cathode inlet and the cathode outlet are relevant while the anode inlet and anode outlet are not relevant. To simplify the description, the relevant apertures are called "inlet" and "outlet" or generically "aperture" whereas the non-relevant apertures are called "bypass inlet" and "bypass outlet." or generically a "bypass aperture."

A cell frame may be any geometry. More common geometries used are circular or rectangular. The terms rectangular and rectangle herein describes a rectangle with rounded or smooth edges. In a particular embodiment, the cell frame is rectangular, which reduces material waste in comparison to a circular cell frame, and includes an inlet side, an outlet side, and a pair of securing sides arranged opposite each other. The inlet side includes an inlet that is configured to receive fluid and a bypass aperture configured to bypass fluid from a current cell, e.g., pass the fluid to another cell or out of the stack. The outlet side includes an outlet that is configured for removing fluid and a bypass aperture configured to bypass fluid from the current cell. A perimeter of the cell frame is defined by the inlet side, outlet side, and the frame sides and an area is defined within the perimeter.

The inlet and the outlet are typically arranged diagonally from each other, which allows the fluid flow from the inlet side to the outlet side. Applicant has leveraged this to reduce area of the bipolar plate as described below.

The cell frame further includes a seal component and a diffusion media aperture configured to house a diffusion media. The seal component cooperates with the bipolar plate to avoid a leakage of fluid between the cell frame and the adjacent bipolar plate. More specifically, leakage of fluid from the diffusion media aperture, from the inlet, and from the outlet is avoided. The seal component may be a groove or a raised portion, and may include polymer material such as O-rings, gaskets. or the like. The seal component encapsulates the diffusion media aperture, the inlet, and the outlet. Additionally, the seal component excludes the bypass apertures, more particularly, the seal component is arranged between each respective bypass aperture and the diffusion media aperture. The exclusion of the bypass aperture may involve sloping sections on the inlet side and the outlet side. The sloping section may have oblique angles or right angles.

The bipolar plate separates the fluids between two adjacent cells and provides electrical connections between the adjacent cells. The bipolar plate includes an anode face and a cathode face being opposite of the anode face. The bipolar plate further includes an inlet side that includes an inlet, which is configured to receive a fluid, and an outlet side that includes an outlet, which is configured for removing fluid. Further includes are a first side and a second side, which may be parallel to the first side. The first side extends from the inlet side to the outlet side and the second side extends from the inlet side to the outlet side.

"Upward" and "Upwards" are defined herein as in the direction from the inlet side towards the outlet side. "Downward" and "downward" are defined herein as in the direction from the outlet side towards the inlet side.

Herein the term "top of the inlet" refers to the point on inlet that is closest to the inlet side whereas the "bottom of the inlet" refers to the point farthest on the inlet from the inlet side. Herein the term "top of the outlet" refers to the point closest on the outlet to the outlet side whereas "bottom of the outlet" refers to the point farthest on the outlet to the outlet side. The term "inward" is defined herein as between inlet and the outlet, in other words inward for the inlet is in the direction of the outlet and inward for the outlet is in the direction of the inlet.

A perimeter of the bipolar plate is bounded by the inlet side, the outlet side, the first side and the second side of the bipolar plate and an area is defined within the perimeter. The perimeter of the bipolar plate is different than the cell frame such that the area defined within the perimeter of the bipolar plate is less than the area defined with the perimeter of the cell frame. A reduction of area of the bipolar plate advantageously reduces the material of the bipolar plate.

The reduction of the area of the bipolar plate may be achieved in various ways. For example, the bypass apertures may be excluded and/or the width between the plate sides reduced.

A segment of the inlet side, between the inlet and the second side, may extend inward. For example, the segment of the inlet side is sloped downwards. The segment of the inlet side may extend inward at a distance greater than the top of the inlet. It would be understood that a greater reduction of material could be achieved when the segment of the inlet side extends inward at least to the bottom of the inlet. For example, the segment of the inlet side is sloped downwards to at least the bottom of the inlet side. The slope may form an oblique angle. In other embodiments, the slope may include a right angle. A segment of the outlet side, between the outlet and the first side, may extend upward. For example, the segment of the outlet side is sloped upwards. The segment of the outlet side may extend inward at a distance greater than the top of the outlet. It would be understood that a greater reduction could be achieved when the segment of the outlet side extends inward at least to the bottom of the outlet. For example, the segment of the outlet side is sloped upwards to at least the bottom of the outlet side. The slope may form an oblique angle. In other embodiments, the slope may include a right angle. In a particular embodiment, the perimeter of the bipolar plate substantially matches the perimeter of the seal component in the cell frame. Wherein substantially matching is defined as at least 97% of the perimeter of the bipolar plate having the same shape as the perimeter of the seal component where the bipolar plate covers the seal and protrudes past the seal to provide the sealing functionality.

When manufacturing the bipolar plates. The sloped side of the inlet of a first bipolar plate may adjoin the sloped side of the outlet of a second bipolar plate, which reduces material and thereby reduces cost. The first side and the second side may be parallel. This may also reduce material as the sheet of metal to produce the bipolar plates typically has parallel edges.

The bipolar plate may be made of titanium providing a high corrosion resistance, especially on the anode face. The thickness may be in the range of 0.5 mm-3mm to provide the necessary structural integrity. In another embodiment the thickness may be in the range of 0.75mm -1.5mm as it would be understood that cost of titanium may vary based on thickness and that the thinner thicknesses are not always the least cost.

The properties, features and advantages of the invention described above, as well as the manner in which they are achieved, will be explained in more detail in connection with the figures in the following description of the example and variations thereof. The example and the corresponding variations serve to explain the invention and do not limit the invention to the combinations of features indicated therein, even with respect to functional features. Moreover, any of the features disclosed in the example below may be considered in isolation and suitably combined with the features of any of the above embodiments and their further aspects.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a schematic view of a PEM electrolyzer.
FIG. 2 illustrates a schematic view of a stack compatible with the PEM electrolyzer of FIG. 1.
FIG. 3A illustrates an embodiment of a cell frame.
FIG. 3B illustrates an aspect of the subject matter in accordance with one embodiment.
FIG. 4 illustrates an embodiment of a bipolar plate.
FIG. 5 illustrates another embodiment of a bipolar plate.
FIG. 6 illustrates alternative seal component configuration for a cell frame.
FIG. 7 illustrates a further embodiment of a bipolar plate compatible with the seal component configuration of FIG. 6.
FIG. 8 illustrates an embodiment of a manufacturing of the bipolar plate of FIG. 4.
FIG. 9 illustrates an embodiment of a manufacturing of the bipolar plate of FIG. 5.
FIG. 10 illustrates an embodiment of a manufacturing of the bipolar plate of FIG. 7.
FIG. 11 illustrates a schematic of a cross section of a partial stack in accordance with an embodiment.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Also, it should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

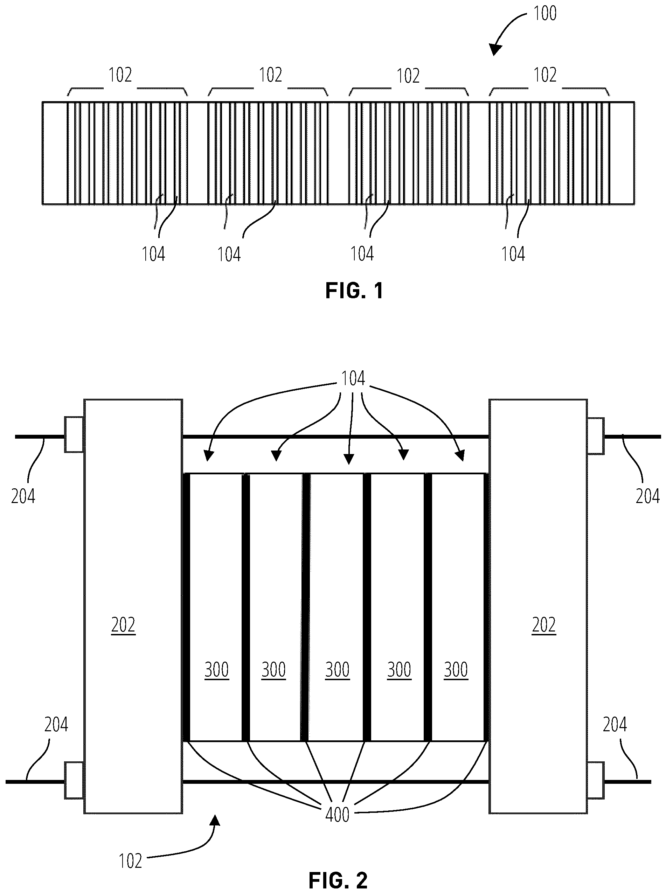

FIG. 1 illustrates a schematic view of a PEM electrolyzer 100. The PEM electrolyzer 100 includes a number of stacks 102, wherein each stack 102 includes a number of cells 104.

FIG. 2 illustrates a schematic view of a stack 102 in more detail. The stack 102 includes a number of cells 104 between endplates 202. Each cell 104 includes a membrane electrode assembly (MEA) that includes a catalyst layer (anode and cathode), and diffusion media. The diffusion media is configured to separate the output medium and the byproduct includes from the supply medium. The diffusion media includes gas diffusion layers (GDLs) that are separated from each other by proton exchange membranes (PEM). The diffusion media is arranged between the anode and cathode, wherein the anode and cathode are included on opposites faces of a bipolar plate 400 when arranged next to a cell frame 300. The bipolar plate 400 separates adjacent cells 104 and provides electrical connection between the adjacent cells 104.

Tie rods 204 and the endplates 202 compress the cell frames 300, which are typically made from a plastic polymer. A pretension is provided in the tie rod to have sufficient contact pressure between the MEA , GDLs and cell frames.

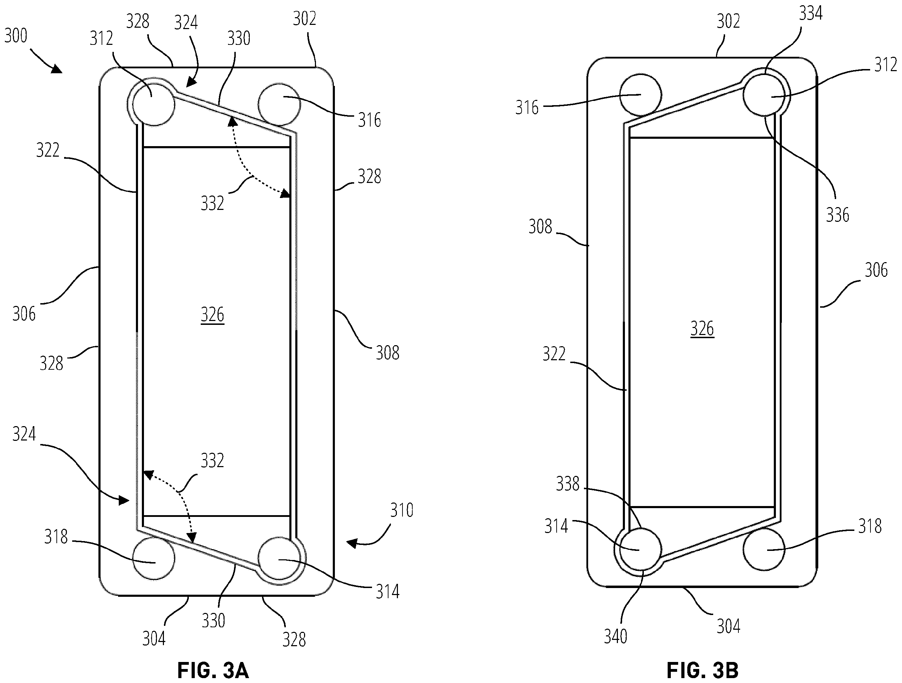

An embodiment of a cell frame 300 is illustrated in FIG. 3A and FIG. 3B.

FIG. 3A illustrates a face of the cell frame 300. The illustrated cell frame 300 is rectangular and includes a diffusion media aperture 326, an outlet side 302, an inlet side 304, a first frame side 306, and a second frame side 308. The outlet side 302 includes an outlet 312 and a bypass outlet 316. The inlet side 304 includes an inlet 314 and a bypass inlet 318. Both the first frame side 306 and the second frame side 308 are formed between the outlet side 302 and the inlet side 304, where the first frame side 306 is arranged on the side closest to the outlet 312 and the bypass inlet 318, and the second frame side 308 is arranged on the side closest to the inlet 314 and the bypass outlet 316. A perimeter 310 of the cell frame 300 is bounded by outer most edges 328 the outlet side 302, the inlet side 304, the first frame side 306 and the second frame side 308.

The cell frame 300 further includes a seal component 322 that is configured to seal the cell frame 300 to a bipolar plate in order to avoid a leakage of fluid from the diffusion media aperture 326, the outlet 312, and the inlet 314. The first frame side 306, second frame side 308, outlet side 302, and the inlet side 304 each includes a portion of the seal component 322. The portions of the seal component 322 on the first frame side 306 and second frame side 308 are parallel to each other and arranged between the diffusion media and the outer most edge 328 of the respective frame side 306, 308.

The portion of the seal component 322, on the outlet side 302, separates the outer most edge 328 of the outlet side 302 from the outlet 312 and from the diffusion media aperture 326, and at least a section 330 of the portion slopes downward from the outlet 312 to the second frame side 308, thereby cooperating with second frame side 308 to define an oblique angle 332 therebetween. The portion of the seal component 322, on the inlet side 304, separates the outer most edge 328 of the inlet side 304 from the inlet 314 and from the diffusion media aperture 326, and at least a section 330 of the portion slopes upward from the inlet 314 to the first frame side 306, thereby cooperating with the first frame side 306 to define an oblique angle 332 therebetween. The seal component 322 has a shape resembling a rhomboid, at least in that the seal component 322 includes parallel portions connected by portions containing slanting sections 330.

FIG. 3B is the mirror image of FIG. 3A and illustrates the opposing face of the cell frame 300. FIG. 3A may illustrate the anode face and FIG. 3B may illustrated the cathode face or vice versa. From FIG. 3A and FIG. 3B, it can be seen that outlet 312 and the bypass outlet 316 have been reversed. Likewise, the inlet 314 and the bypass inlet 318 are reversed. The top of the outlet 334 is the point on the outlet 312 that is closest to the outlet side 302 whereas the bottom of the outlet 336 is the point on the outlet 312 that is furthest to the outlet side 302.The top of the inlet 338 is the point on the inlet 314 that is closest to the inlet side 304 whereas the bottom of the inlet 340 is the point on inlet 314 that is furthest to the inlet side 304,

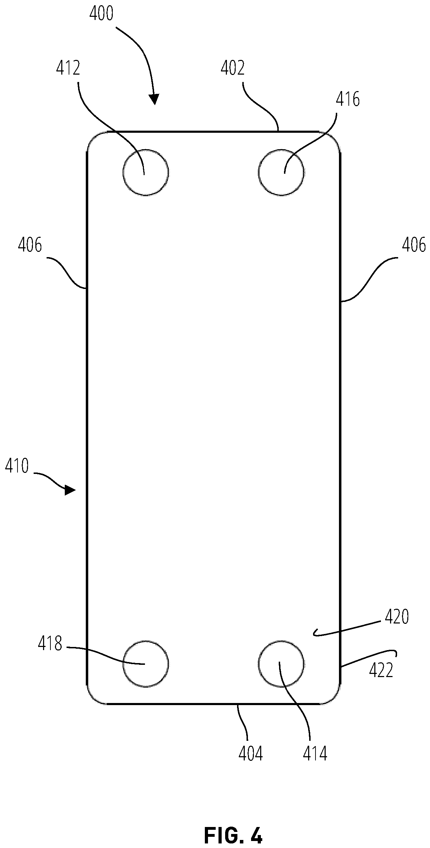

FIG. 4 illustrates an embodiment of a bipolar plate 400. The bipolar plate 400 includes a face 420 and an opposing face 422, where one of the faces 420, 422 is the anode face and the other is the cathode face. The bipolar plate 400 includes an outlet 412, a bypass outlet 316, an inlet 414, and bypass inlet 418, which are arranged to be aligned with the same features (outlet 312, bypass outlet 316, inlet 314, and bypass inlet 318) of the cell frame 300. The outlet 412 bypass outlet 416 are arranged on an outlet side 402, the inlet 414 and bypass inlet 418 is arranged on the inlet side 404. The bipolar plate 400 also includes a pair of plate sides 406, which are parallel to each other, and is formed between the outlet side 302 and the inlet side 304, wherein the bipolar plate 400 is rectangular.

A perimeter 410 of the bipolar plate 400 is defined by the outlet side 302, the inlet side 304, and the first frame sides 306. The perimeter 410 of the bipolar plate 400 matches that of the perimeter 310 of the cell frame 300. That is, the perimeter 410 of the bipolar plate 400 is substantially the same shape and size as the perimeter 310 of the cell frame 300. Therefore, the areas formed by the respective perimeters 310, 404 are essentially the same.

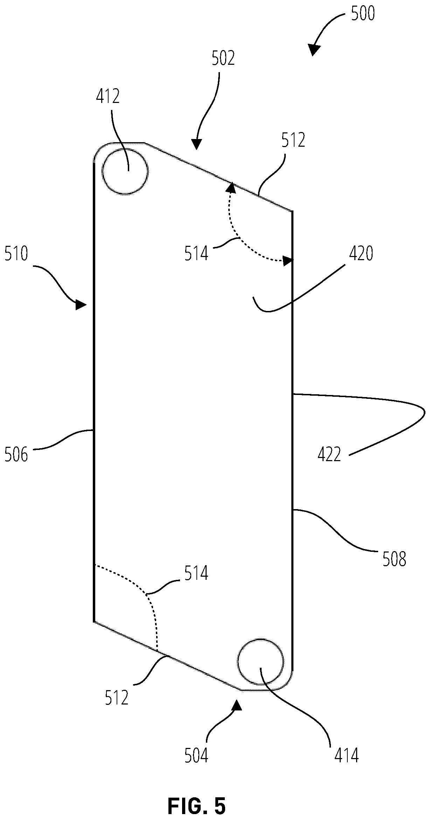

FIG. 5 illustrates another arrangement of a bipolar plate 500. The bipolar plate 500 includes a face 420 and an opposing face 422, where one of the faces 420, 422 is the anode face and the other is the cathode face, an outlet side 502. The bipolar plate 500 further includes an outlet side 502, an inlet side 504, a first plate side 506, and a second plate side 508. The outlet side 502 includes an outlet 412 and an inlet side 504 includes an inlet 414.The outlet 412 and the inlet 414 are arranged to be aligned with the same features (outlet 312 and inlet 314) of the cell frame 300. The first plate side 506, which is on a side that is nearest the outlet 412, extends from the outlet side 502 to the inlet side 504. A second plate side 508, which is on a side nearest the inlet 414, extends from the outlet side 502 to the inlet side 504.

A segment 512 of the outlet side 502 slants downward between the outlet 412 and the second plate side 508, thereby the segment 512 cooperating with the second plate side 508 to define an oblique angle 514 therebetween. A segment 512 of the inlet side 504 slants upwards between the inlet 414 and the first plate side 506, thereby the segment 512 cooperating with the first plate side 506 to define an oblique angle 514 therebetween.

The perimeter 510 of the bipolar plate 500 is defined by the outlet side 502, the inlet side 504, the first plate side 506, and the second plate side 508. The perimeter 510 of the bipolar plate 500 is substantially the same as the seal component perimeter 324 to assure that when the bipolar plate 500 is positioned to adjoin the seal component 322 on the cell frame 300, a complete seal can be formed between the two components.

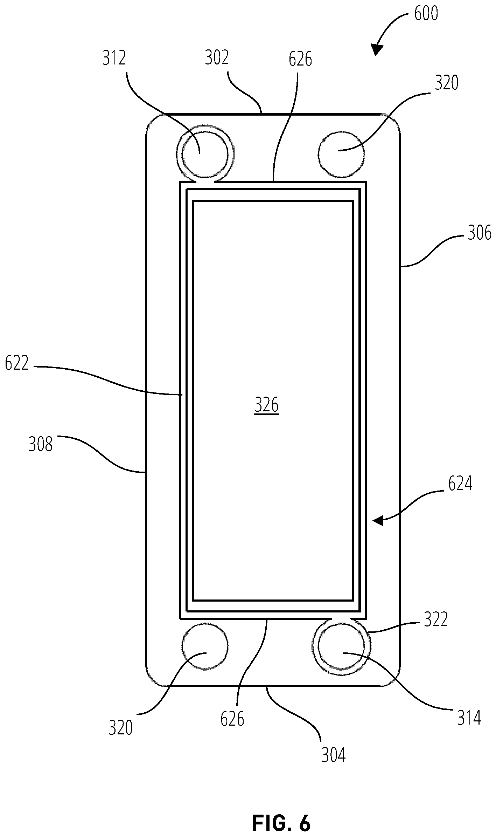

FIG. 6 illustrates a cell frame 600 with an alternative seal component 622 configuration that is configured to seal the cell frame 300 to a bipolar plate in order to avoid a leakage of fluid. The seal component 622 includes portions on the first frame side 306, the second frame side 308, the outlet side 302 and the inlet side 304. The portions of the seal component 622 on the first frame side 306 and the second frame side 308 are arranged parallel to the diffusion media aperture 326. The portion of the seal component 622 on the outlet side 302 encapsulates the outlet 312 and includes a segment 626 that is arranged parallel to the diffusion media aperture 326. The portion of the seal component 622 on the inlet side 304 encapsulates the inlet 314 and includes a segment 626 that is arranged parallel to the diffusion media aperture 326. The seal component perimeter 624 is bounded by the seal component 622.

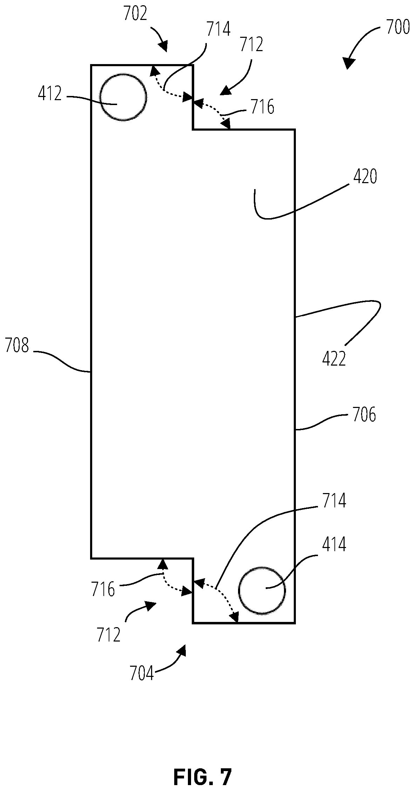

FIG. 7 illustrates another bipolar plate 700 that may be used with alternative seal component arrangement of FIG. 6. The bipolar plate 700 includes a face 420 and an opposing face 422, where one of the faces 420, 422 is the anode face and the other is the cathode face. The bipolar plate further includes an outlet side 702, an inlet side 704, a first plate side 706, and a second plate side 708. The outlet side 702 includes an outlet 412, and an inlet side 704 includes an inlet 414. The first plate side 706, which is on a side that is nearest the outlet 412, extends from the outlet side 702 to the inlet side 704. A second plate side 708, which is on a side nearest the inlet 414, extends from the outlet side 702 to the inlet side 704.

The outlet side 702 includes a stepwise segment 712 that includes a first perpendicular angle 714 and a second perpendicular angle 716, wherein the stepwise segment 712 extends inward at the first perpendicular angle 714 midway between the first plate side 706 and the second plate side 708, and extends towards the second plate side 708 at the second perpendicular angle 716. The second outlet side 702 includes a stepwise segment 712 that includes a first perpendicular angle 714 and a second perpendicular angle 716, wherein the stepwise segment 712 extends inward at the first perpendicular angle 714 midway between the first plate side 706 the second plate side 708, and extends towards the first plate side 506 at the second perpendicular angle 716.

The perimeter 510 of the bipolar plate 700 is defined by the outlet side 702, the inlet side 704, the first plate side 706, and the second plate side 708.

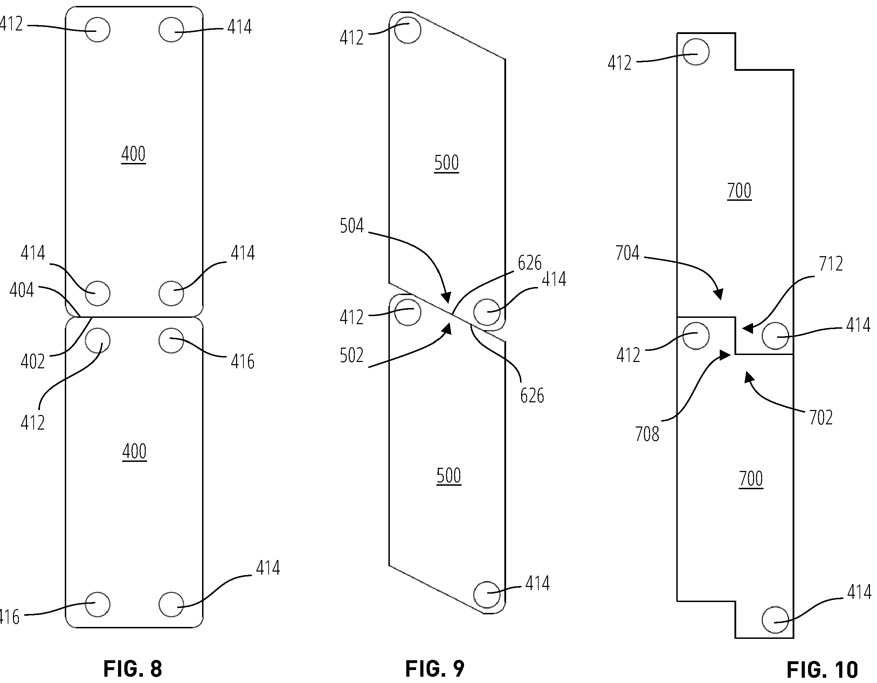

FIG. 9 illustrates how the bipolar plate 400 can be produced from a sheet of metal. The figure illustrates two bipolar plates 400 with the inlet side 404 of a first of the two bipolar plates formed on the outlet side 402 of a second of the two bipolar plate, e.g., the inlet side 404 of the first of the two bipolar plates 400 abuts the outlet side 402 of the second of the two bipolar plates 400. The two bipolar plates 400 may be separated by a cut with perpendicular angle between the two bipolar plates 400.

FIG. 10 illustrates how the bipolar plate 500 can be produced from a sheet of metal. The figure illustrates two bipolar plates 500 with the slant segment 626 of the inlet side 504 of a first of the two bipolar plates abutting the slant segment 626 of the outlet side 502 of a second of the two bipolar plate is formed. The arrangement of the slant segment allows the second of the bipolar plates 500 be shifted upward in comparison to that of FIG. 8. The arrangement allows for a reduction of material used for each plate, thereby reducing the weight and the cost. A reduction of waste may also be realized, further reducing the cost. The two bipolar plates 400 may be separated by a cut along the oblique angle 332 between the two bipolar plates 400.

FIG. 10 illustrates how the bipolar plate 700 can be produced from a sheet of metal. The figure illustrates two bipolar plates 700 with the stepwise segment 712 of the inlet side 704 of a first of the two bipolar plates bipolar plate 700 abutting the stepwise segment 712 of the outlet side 702 of a second of the two bipolar plates 700 is formed. The arrangement of the stepwise segment allows the second of the bipolar plates 500 be shifted upward in comparison to that of FIG. 8. The arrangement allows for a reduction of material used for each plate, thereby reducing the weight and the cost. A reduction of waste may also be realized, further reducing the cost. The two bipolar plates 400 may be separated by a cut along the stepwise segment between the two bipolar plates 400.

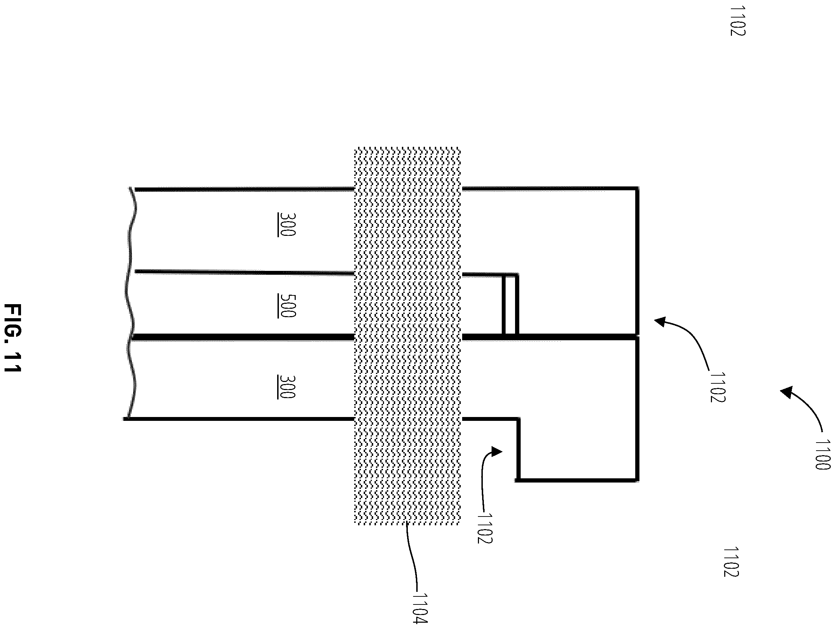

FIG. 11 illustrates a schematic cross section of a partial stack 1100 that includes a bipolar plate 500 with a cell frame 300 on each side. A passage 1104 extends through the cell frames 300 and the bipolar plate 500/. As described above, the bipolar plate 500 may be reduced in size, for example, where the bypass aperture is excluded or the length or width of the bipolar plate 500 was reduced. According to the illustrated embodiment, the cell frame 300 includes an extension portion 1102 that extends over the bipolar plate 500. The extension portion 1102 is in an area where the cell frame 300 is configured to abut a region of the bipolar plate 500 where a reduction in size occurred. For example, the extension area may be formed or placed around the perimeter of the cell frame 300 such that the bipolar plate 500 is arranged inside of the cell frame 300 when forming the stack. The extension portion 1102 may be integrated into the cell frame 300 or separate. The extension portion 1102 may provide sealing and stability between the cell frame 300 and the bipolar plate 500.

Although an exemplary embodiment of the present disclosure has been described in detail, those skilled in the art will understand that various changes, substitutions, variations, and improvements disclosed herein may be made without departing from the spirit and scope of the disclosure in its broadest form.

Specific arrangements of the seal component have been illustrated. It would be understood that other arrangements may employed. For example, the seal component may have a stepwise segment on the inlet side and on the outlet side.

Furthermore, illustrations with rounded corners may be squared or vice versa. While the bipolar plate 500 is illustrated with a rounded segment over the inlet and the outlet, the segment over the inlet and outlet may be other shapes. By way of example, a triangular segment which may be easier to manufacture by performing a single straight cut to separate the inlet side from the outlet side. The specific stepwise segment of the bipolar plate 700 in FIG. 10 illustrates the stepwise segment of a first bipolar plate 700 abutting the second bipolar plate 700, which may allow for a single cut to separate the inlet side from the outlet side. It would be understood that the step segment over the inlet and over the outlet may be reduced such that there is a gap between the step segments. While a smaller step segment would decrease the amount of material used in the bipolar plate, manufacturing costs may increase because of the additional cuts and the gap segment of the material would be scrap material.

It would be understood that the cell described in FIG. 11 is not limited to the bipolar plate 500 or cell frame 300 and other embodiments may be used. For example, bipolar plate 700 or cell frame 600 may be used. Or any bipolar plate of reduced material may be incorporated. Furthermore, the schematic illustration is not intended to limit the shape or size of the extension portion 1102.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. A bipolar plate (500, 700) comprising:
an inlet side (504, 704) comprising an inlet (412) configured for receiving a first fluid,
an outlet side (502, 702), arranged opposite of the inlet side (504, 704), comprising an outlet (414) configured for removing a second fluid,
a first side (506, 708) extending from the inlet side (504, 704) to the outlet side (502, 702) and arranged on a side closest to the inlet (412),
a second side (508, 710) extending from the inlet side (504, 704) to the outlet side (502, 702) and arranged on a side closest to the outlet (414),
a first perimeter (510) defined by the inlet side (504, 704), the outlet side (502, 702), the first side (504) and the second side (508); and
a first area defined within the first perimeter (510),
wherein a segment of the inlet side (504, 704), between the inlet (412) and the second side (508) extends inward, and
wherein a segment of the outlet side (502, 702), between the outlet (414) and the first side (506) extends inward.

2. The bipolar plate (500, 700) of claim 1,
wherein the segment of the inlet side (504, 704) slopes downward, and
wherein the segment of the outlet side (502, 702) slopes upwards.

3. The bipolar plate (500, 700) of claim 1,
wherein the segment of the inlet side (504, 704) slopes downward at least to a bottom of the inlet, and
wherein the segment of the outlet side (502, 702) slopes upwards at least to a bottom of the outlet.

4. The bipolar plate (500) of claim 2 or 3,
wherein the slope on the inlet side (504) and the slope on the outlet side (502) form oblique angles.

5. The bipolar plate (700) of claim 2 or 3,
wherein the slope on the inlet side (706) and the slope on the outlet side (702) form a right angle.

6. The bipolar plate (500, 700) of any one of claims 1-3 or 5,
wherein the inlet (312) and the outlet (314) are arranged diagonally from each other.

7. The bipolar plate (500, 700) of any one of claims 1-3 or 5-6,
wherein the first side is parallel with the second side.

8. The bipolar plate (500, 700) of any one of claims 1-3 or 5-6,
wherein the bipolar plate (500) excludes bypass apertures.

9. The bipolar plate (500, 700) of any one of claims 1-3, 5-6 or 8,
wherein the bipolar plate is formed from titanium.

10. The bipolar plate (500, 700) of claim 9,
wherein the bipolar plate is 0.5 mm - 3 thick.

11. The bipolar plate (500, 700) of claim 9,
wherein a plurality of titanium sheets may be used to form the bipolar plate.

12. An electrolyzer stack arrangement comprising:
the bipolar plate (500, 700) of claim 1,
a cell frame (300) comprising,
a diffusion media aperture (326) configured to house a diffusion media,
a seal component (322) cooperating with the bipolar plate to avoid a leakage of fluid between the cell frame and the bipolar plate,
an inlet side (504, 704) comprising,
an inlet (312) configured to receive a first fluid and
a first bypass aperture (320) configured to bypass fluid from the cell frame (300),
an outlet side (502, 702) comprising,
an outlet (314) configured for removing a second fluid and
a second bypass aperture (418) configured to bypass fluid from the cell frame (300),
a pair of frame sides (306) arranged opposite each other, each of the pair of frame side (306),
a second perimeter (310) defined by the inlet side (504, 704), the outlet side (502, 702), and the pair of frame sides (306),
a second area defined within the second perimeter (322), and
wherein the second area is smaller than the first area.

13. The electrolyzer stack arrangement of claim 12,
wherein the first perimeter substantially matches the second perimeter.

14. The electrolyzer stack arrangement of claim 12 or 13,
wherein the second area is less than 5% greater than the perimeter of the seal component (322).
